# EUROPEAN PATENT SPECIFICATION

(11) **EP 1 546 692 B1**
(45) Date of publication and mention of the grant of the patent: **19.11.2014**
(21) Application number: 03797784.0
(22) Date of filing: 19.09.2003
(51) Int. Cl.: G01N 21/27, G01N 21/35

(54) **Method and apparatus for standardization of a measuring instrument**
Verfahren und Vorrichtung zur Standardisierung eines Messinstruments
Procédé et appareil de standardisation d'un instrument de mesure

(30) Priority: 19.09.2002 SE 0202780; 30.10.2002 US 283170
(43) Date of publication of application: 29.06.2005
(73) Proprietor: FOSS Analytical AB, 263 21 Höganäs (SE)
(72) Inventor: Büchmann, Bo, DK-1812 Frederiksberg (DK); Westerhaus, Mark, State College PA 16803 (US); Nilsson, Sven-Anders, S-260 41 Nyhamnsläge (SE); Ebelin, Anders, S-260 23 Kågeröd (SE)
(74) Representative: Åkesson, Sten Jan-Åke
(86) International application number: PCT/SE2003/001467
(87) International publication number: WO 2004/027404

(56) References cited:
- EP-A- 0 374 034
- WO-A1-01/94016
- DE-A1- 19 603 000
- US-A- 3 776 642
- US-A- 3 960 497
- US-A- 4 095 105
- US-A- 5 691 812
- US-A- 6 073 476
- US-A- 6 081 326
- US-A1- 2002 030 598
- "CALIBRATION KIT", IBM TECHNICAL DISCLOSURE BULLETIN, IBM CORP, vol. 39, no. 1 , - 1 January 1996 (1996-01-01), page 417, XP000556451, NEW YORK, US ISSN: 0018-8689

## Description

### Technical field of the invention

The present invention relates to a portable device and a method for standardization of a satellite spectral measuring instrument to a corresponding master spectral measuring instrument.

### Background of the Invention

Spectral measuring, or analytical instruments, like Near Infrared Reflection (NIR) and Near Infrared Transmission (NIT) instruments, are widely used in e.g. the food industry or in agriculture to analyse the composition and nutritive value of foods and of crops such as forages. For example, the amount of constituents such as crude protein, fat, and carbohydrates may be determined by spectral analysis.

Direct analyses of e.g. a sample of rice on two spectral analysis instruments of the same design will probably produce somewhat different results. The differences may be due to manufacuring variability and instability of the instruments.

In order to obtain comparable results when analysing the same sample on several spectral analyzers of the same design, the instruments are standardized. Thus, after standardization, the analytical results from each of several "satellite" instruments, i.e. instruments located at different measurement sites, are corrected so that they correspond to the analytical results from a "master" instrument.

In this standardization procedure, a so called "standardization cup" containing a reference material is usually used. This standardization cup is hermetically sealed so that the quality of the reference material is maintained over a long period of time. Firstly, the reference material is analysed using the master instrument. The result from this analysis, in the form of a "master" spectrum of the reference material, is stored on a disc together with information identifying the reference material and information identifying the master instrument.

Thereafter, this disc and the standardization cup are sent to a user of a satellite instrument. The standardization cup is then put into the satellite instrument and the disc is inserted into a computer connected to the satellite instrument. The reference material is then analysed by the satellite instrument whereby a "satellite" spectrum for the sample is produced. This satellite spectrum is then compared to the master spectrum on the disc by means of a software program on the computer. If the satellite spectrum differs from the master spectrum, which is usually the case, the program produces a standardization model which mathematically transforms the satellite spectrum to correspond to the master spectrum. The standardization model is then stored on the computer and may be used to transform the results of future routine analyses on the satellite instrument for samples of the same type of material as the reference material.

A problem with this known standardization procedure is that there is always a risk that a disc with "standardization" information relating to a specific reference material is lost, or worse, is confused with some other standardization disc for another reference material. The consequences of lost standardization discs are delayed or cancelled standardizations. The consequence of confusion as to the identity of standardization discs is error in predicted values for all routine samples measured on that satellite instrument, at least until the next time the satellite instrument is standardized.

For a standard routine analysis, where the composition of an unknown sample (e.g. grain from a process line) is to be analysed, an operator puts the sample into a sample cup and the sample cup into the (satellite) instrument. Then the operator enters information about the sample type (grain etc.) on the computer, chooses from a data base on the computer an appropriate standardization model and a prediction model to be applied to the sample and starts the analysis of the sample by the instrument. During the analysis, a spectrum of the sample material is collected, standardized and has a prediction model applied to it in order to translate this standardized spectrum to predictions of chemical composition. It is desirable that routine analysis of samples is more automated, so that mistakes due to "the human factor" may be eliminated and the procedure may be quicker. With the existing system there is always a risk of having erroneous prediction values if the operator chooses the wrong standardization model or prediction model.

A calibration kit consisting of a set of one or more radiofrequency identification tags, of which each tag has a previously calibrated set of characteristics, is disclosed in IBM Technical Disclosure Bulletin, Vol. 39, No. 01, January 1996.

The American patent, with number US 5,691,812, discloses a calibration standard having artificial defects of a predetermined uniform size disposed on selected areas of a substrate. It is claimed that the operator can determine the size of the artificial defects on the substrate without reference to any external source.

The American patent application with number US 2002/0030598, discloses a multiwell plate for use in performing biological and chemical analysis, the content of which are identifiable by means of a radio frequency labeling system.

The international patent application with number WO 01/94016, discloses a sample container comprising a retainer for retaining a sample; and a radiofrequency identifier comprising an antenna for transmitting or receiving radiofrequency energy; an integrated circuit chip connecting with said antenna; and a carrier for the radiofrequency identifier; wherein the radiofrequency identifier is on the carrier and the carrier connects to the retainer.

### Summary of the Invention

An objective of the present invention is to provide an improved method for standardization of a satellite measuring instrument to a corresponding master measuring instrument.

A particular objective of the invention is to provide increased security of the standardization procedure.

Another objective of the present invention is to provide an improved method for obtaining a standardized result when by routine measuring a sample material by means of a satellite measuring instrument.

Another particular objective of the invention is to facilitate a higher level of automation of both the standardization procedure and the procedure for routine analysis of a sample material.

For achieving at least some of these, and other objectives, a portable device according to the invention, and a method for standardization of a satellite measuring instrument according to the invention are provided.

More particularly, according to the invention, a portable device for standardization of a satellite spectral measuring instrument to a corresponding master spectral measuring instrument, the device comprising a reference material, a means for containing the reference material, and an information unit physically attached to said means for containing the reference material and having a memory for storing information about the reference material characterized in that the memory also stores one or both transmission and reflection reference spectral data of spectral measurements of the reference material on the master spectral measuring instrument; and said means for containing a reference material comprises one or more windows disposed to permit one or both transmission and reflection measurements by the satellite spectral measuring instrument on said reference material. By physically binding the standardization information together with the reference material in one "portable device", the risk of choosing the wrong standardization information, or losing the information, is as good as eliminated. Thus, the portable device should here be seen as a single unit device. The portable device may comprise a standardization cup with an information unit in the form of a chip attached to it.

In one preferred embodiment of the invention, said information further is about said master measuring instrument. Thereby, the master measuring instrument may be identified by means of the information, which e.g. could comprise serial number, model number etc. of the master measuring instrument.

According to the invention, said information unit is physically attached to said means for containing said reference material. This could is the case if the portable device, as suggested above, comprises a standardization cup with a chip attached to it.

According to the invention, said information unit comprises a memory for storing said information. Such a memory may be in the form of an Electrical Eraseable Programmable Read Only Memory (EEPROM), or some other type of appropriate memory circuit. Since digital memories can be made very small today and still have large storing capacity, a memory is comprised in the information unit.

According to another preferred embodiment of the invention, said information unit further comprises means for transmitting said information to said satellite measuring instrument. By means of such arranged transmitting means being part of the information unit, the information may easily be loaded into the satellite measuring instrument for enabling the standardization procedure.

According to another preferred embodiment, said means for transmitting said information is arranged for wireless data transfer. This is advantageous since no "plugging in" is then needed in order to transmit the information to the satellite measuring instrument.

According to yet another preferred embodiment, said means for transmitting said information comprises a radio frequency identifier. A radio frequency identifier of today allows wireless non-contact reading and is relatively cheap, may have a robust construction and may include read and write electronic storage technology.

In another preferred embodiment of the invention, said information about the reference material comprises identification of said reference material. Thus, the reference material can be identified and the identification information may be stored together with the standardization model to be produced for that specific type of material.

In another preferred embodiment, said information about the reference material further comprises an expiry date of said reference material. Thereby, the risk that measurements are made on an old, degraded reference material may be eliminated.

According to another preferred embodiment of the invention, said information about measurements of the reference material on the master instrument comprises a reference spectrum. A reference spectrum may be used to standardize a satellite instrument in the form of a spectral analysis instrument.

According to one preferred embodiment, said reference spectrum is within the entire electro-magnetic wavelength range.

According to another preferred embodiment, said reference spectrum is within the visible and infrared wavelength interval. Common spectral analysis instruments like e.g. NIR and NIT instruments work within this wavelength interval.

In one preferred embodiment of the invention, said reference spectrum is measured by means of said master measuring instrument being a visible and near infrared reflection measuring instrument.

In another preferred embodiment of the invention, said reference spectrum is measured by means of said master measuring instrument being a visible and near infrared transmission measuring instrument.

In one preferred embodiment, said means for containing said reference material is hermetically sealable. Thereby, the quality of the reference material may be maintained over a long period of time.

In another preferred embodiment, said means for containing said reference material allows visible and near infrared reflection measurements of said reference material being contained in said means for containing said reference material. This may be achieved by means of the one or more windows to a chamber of said means for containing said reference material.

In yet another preferred embodiment, said means for containing said reference material allows visible and near infrared transmission measurements of said reference material being contained in said means for containing said reference material. This may be achieved by means of two windows to a chamber of said means for containing said reference material.

By providing a measuring instrument with a means for reading information from an information unit of a portable device according to above, standardization information regarding the reference material may quickly, simply and safely be transferred to the measuring instrument and used to produced a standardization model for such material.

According to one preferred embodiment of the invention, said means for reading information is arranged to read said information wirelessly. This is advantageous because the information unit does not need to be physically connected to the measuring instrument, whereby the reading of the information gets even more quick and simple.

According to another preferred embodiment of the invention, said information is about said reference material and measurements of said reference material on a master measuring instrument corresponding to said measuring instrument. Such information allows standardization of the measuring instrument to be made.

According to another preferred embodiment, said information further is about said master measuring instrument. Thereby, e.g. the specific type of the master measuring instrument may be identified.

According to yet another preferred embodiment, a means for measuring said sample material is arranged to automatically start measuring on said reference material when said portable device is located in said receiving means. This makes both routine analyses and the procedure of standardizing measuring instruments faster and easier.

In another preferred embodiment of the invention, said means for reading information from said information unit of said portable device is arranged to automatically start reading said information when said portable device is located in said receiving means. This too may make both routine analyses and the procedure of standardizing measuring instruments faster and easier.

In another preferred embodiment, said means for reading said information comprises a radio frequency identification reader. As mentioned above, Radio Frequency Identification (RFID) technology allows wireless reading while being relatively cheap and robust.

In another preferred embodiment, said measuring instrument is visible and near infrared reflection measuring instrument.

In yet another preferred embodiment, said measuring instrument is a visible and near infrared transmission measuring instrument.

According to another aspect of the invention, a method for standardization of a satellite spectral measuring instrument to a corresponding master spectral measuring instrument

As mentioned above, this standardization model allows the satellite measuring result, for example in the form of a spectrum, to be mathematically transformed to correspond to the master measurement. The standardization model may be seen as a way of converting the satellite measuring result into a standardized measuring result.

According to the invention, by reading the information from an information unit which is a part of said portable device, the standardization procedure can be made faster and more secure.

According to one preferred embodiment of this inventive method, said information further is about said reference material and said master measuring instrument. , comprising
storing information obtained by means of a master spectral measuring instrument regarding a reference material contained in a portable device as discussed above in the information unit of said portable device;
transporting said portable device from said master spectral measuring instrument to said satellite spectral measuring instrument;
transmitting said information from said information unit to said satellite spectral measuring instrument;
measuring, by means of said satellite spectral measuring instrument, said reference material; and
producing and storing a standardization model describing the difference between the result of said action of measuring said reference material and said corresponding measurement obtained by means of said master spectral measuring instrument.

According to another preferred embodiment, said method is performed by the help of an external computer. Thereby, less "intelligent" satellite measuring intruments may be standardized.

According to yet another preferred embodiment, said action of producing and storing said standardization model is performed by means of said external computer.

In one preferred embodiment, said method is performed automatically when said portable device is located in a receiving means of said satellite measuring instrument. This makes the procedure of standardizing the satellite measuring instrument faster and easier, requiring less measures to be taken by a user.

In another preferred embodiment, said satellite measuring instrument is a visible and near infrared reflection measuring instrument.

In yet another preferred embodiment, said satellite measuring instrument is a visible and near infrared transmission measuring instrument.

The inventive portable device may be used also for obtaining a standardized result when by routine measuring a sample material by means of a satellite measuring instrument. The inventive method makes standardized routine measurements faster, easier and more secure.

In one preferred embodiment, said reading of said information is made wirelessly.

In another preferred embodiment, said information of the identity of the type of said sample material further is used to select the correct prediction model from amongst at least a few prediction models stored in at least one of said satellite measuring instrument and said external computer.

A prediction model is used to translate, or mathematically convert, the spectral information into analytical information, i.e. information in the form of chemical quantities. Hence, the prediction model may be seen as a way of converting the spectral information into analytical information.

In another preferred embodiment, said method further comprises applying said prediction model to said standardized spectrum of said sample material in order to obtain the desired analytical result for said sample material that is essentially identical to the result that would have been obtained by means of said master measuring instrument.

According to another preferred embodiment, said method is performed automatically when said portable device is located in a receiving means of said satellite measuring instrument.

According to yet another preferred embodiment, said satellite measuring instrument is a visible and near infrared reflection measuring instrument.

According to yet another preferred embodiment, said satellite measuring instrument is a visible and near infrared transmission measuring instrument.

The means for containing the reference material may consist of a cup which supports a chip for storing information about said reference material and for wirelessly transmitting said information to a measurement instrument for measuring said reference material.

### Brief Description of the Drawings

The present invention will now be described in more detail with reference to the accompanying drawings, in which
Fig. 1 is a simplified schematic view of one preferred embodiment of a portable device according to the invention;
Fig. 2 is a simplified schematic view illustrating
the interaction between one preferred embodiment of a measuring instrument according to the invention and a portable device as shown in Fig. 1;
Fig. 3 is a more detailed schematic perspective view
of another preferred embodiment of a measuring instrument according to the invention;
Fig. 4 is a schematic perspective view of another preferred embodiment of a portable device according to the invention;
Fig. 5 is a flow chart illustrating the steps of a preferred embodiment of a method according to the invention for standardization of a satellite measuring instrument to a corresponding master measuring instrument; and
Fig. 6 is a flow chart illustrating the steps of an embodiment of a method which does not form part of the invention for obtaining a standardized result when routinely measuring a sample material by means of a satellite measuring instrument.

### Detailed Description of Preferred Embodiments

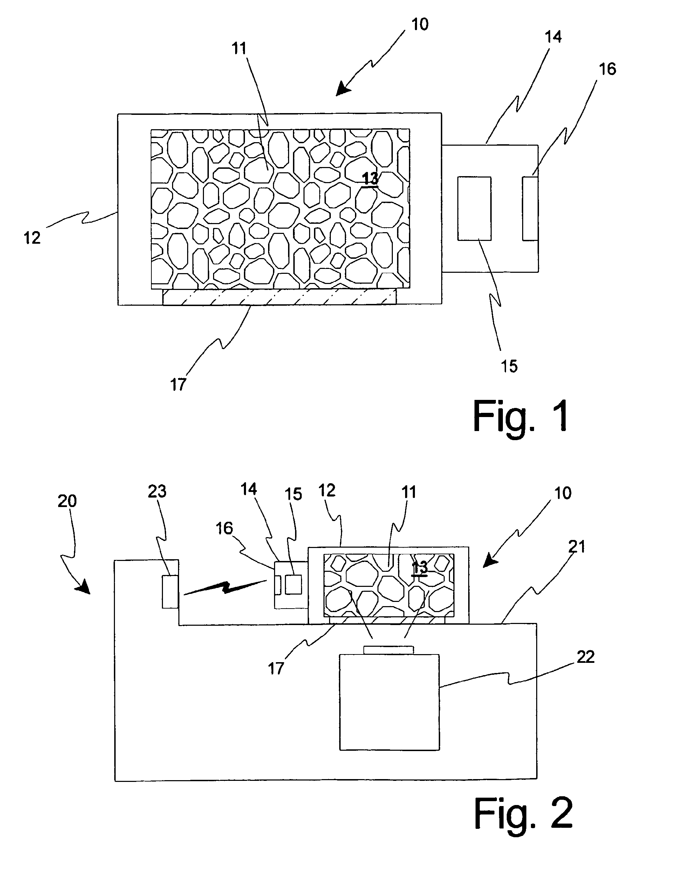

Fig. 1 shows one preferred embodiment of a portable device 10 according to the invention.

The portable device 10 comprises a means for containing a reference or sample material 11, here in the form of a container 12 defining a chamber 13 for containing the material 11. The container 12 may be arranged to allow spectral measurements, such as e.g. visible and near infrared reflection and/or transmission measurements, of the material 11 while the material 11 is contained in the chamber 13. In Fig. 1 is shown an analysis window 17 of the portable device 10 through which visible and near infrared reflection measurements can be made. In order to allow also visible and near infrared transmission measurements, the portable device 10 may be provided with another analysis window (not shown) on the opposite side of the chamber 13.

The inventive portable device 10 further comprises an information unit 14, which is supported by the container 12, and which includes a storage means, here in the form of a memory 15, for storing information regarding the material. The memory 15 may be an Electrical Eraseable Programmable Read Only Memory (EEPROM), or some other type of appropriate memory circuit.

The information unit 14 also includes a means for transmitting the information to a measuring instrument or to an external computer connected to a measuring instrument, which means for transmitting here is in the form of a transmitter 16 being arranged for wireless data transfer.

Fig. 2 shows one preferred embodiment of a measuring instrument according to the invention, here in the form of a spectral analysis instrument 20, e.g. a visible and near infrared reflection and/or transmission measuring instrument, and a portable device 10 as shown in Fig. 1. The portable device 10 in Fig. 2 is located upon a receiving means 21 of the spectral analysis instrument 20, where a material 11 inside the chamber 13 of the container 12 may be presented for a means for measuring the material 11, here in the form of a detector 22 of the spectral analysis instrument 20.

The measuring instrument further comprises a means, here a reader (or receiver) 23, for wirelessly reading the information from the information unit 14 of the portable device 10.

The communication between the transmitter 16 of the information unit 14 and the reader 23 may be wireless, whereby no physical connection would be needed in order to transmit the information stored in the memory 15 of the information unit 14 to the spectral analysis instrument 20. The wireless communication may be implemented according to any common protocol for wireless data transfer, for example IEEE 802.11 or Bluetooth^{®}, or, preferably, in a more simple way according to any standard for Radio Frequency Identification (RFID).

The measuring instrument may be arranged so that it automatically starts measuring the material 11 when the portable device 10 is placed upon the receiving means 21. The measuring instrument may further be arranged to automatically start reading the information from the information unit 14 when the portable device 10 is placed upon the receiving means 21.

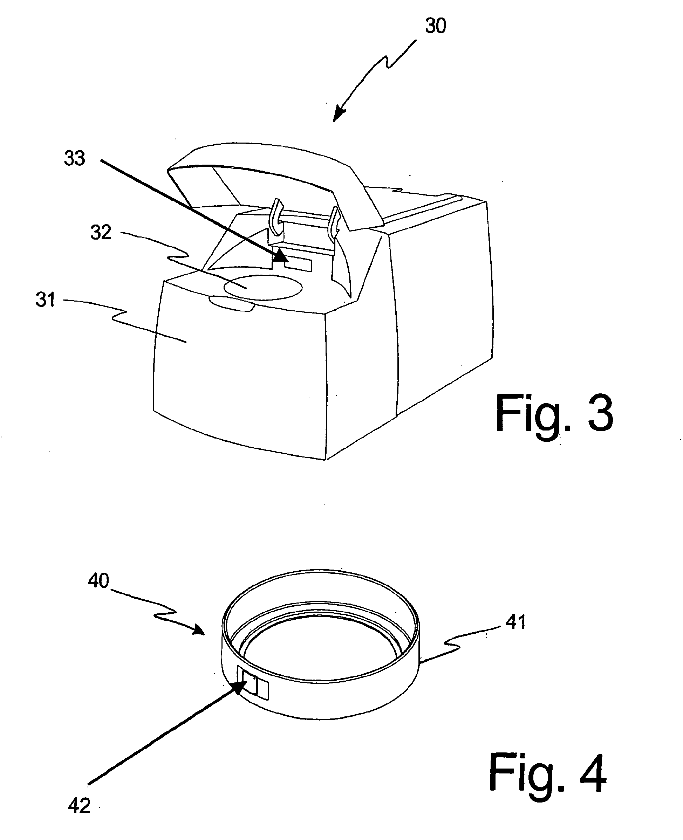

Fig. 3 shows another, and more detailed, preferred embodiment of a measuring instrument according to the invention. What is shown is the casing 31 of a spectral analysis instrument 30, including a receiving means in the form of a plate 32 for receiving and supporting a portable device with a content to be analysed. The spectral analysis instrument 30 shown also includes an RFID reader with an interface 33 for wirelessly reading information from an information unit of an inventive portable device.

Fig. 4 shows another, and more detailed, preferred embodiment of a portable device 40 according to the invention. Here, the portable device 40 is in the form of a cup 41 into which a reference or sample material may be put. If a material is to be contained in the cup 41 for a long time, which is usually the case when the material is a reference material, the cup 41 may be hermetically sealed by means of a lid (not shown). Onto the cylindric wall of the cup 41, an RFID tag (or chip) 42 is attached. The RFID tag 42 contains a memory for storing of information regarding the material in the cup 41.

In the case where the portable device is used for standardization, the information stored in the memory of the information unit (14 in Fig. 1 and 2 or 42 in Fig. 4) is about the reference material, a master measuring instrument, and measurements of the reference material on the master measuring instrument. More particularly, the information comprises identification of both the reference material and the master measuring instrument, plus data about the reference material collected by the master measuring instrument during measurement of the reference material by the master measuring instrument.

The data about the reference material may be in the form of a reference spectrum collected by the master measuring instrument. The reference spectrum may be within the entire electro-magnetic wavelength range, or preferably within the visible and infrared wavelength interval.

The information stored in the memory of the information unit may also comprise an expiry date of the reference material, and information about the temperature of the reference material during the measurement of it by the master measuring instrument.

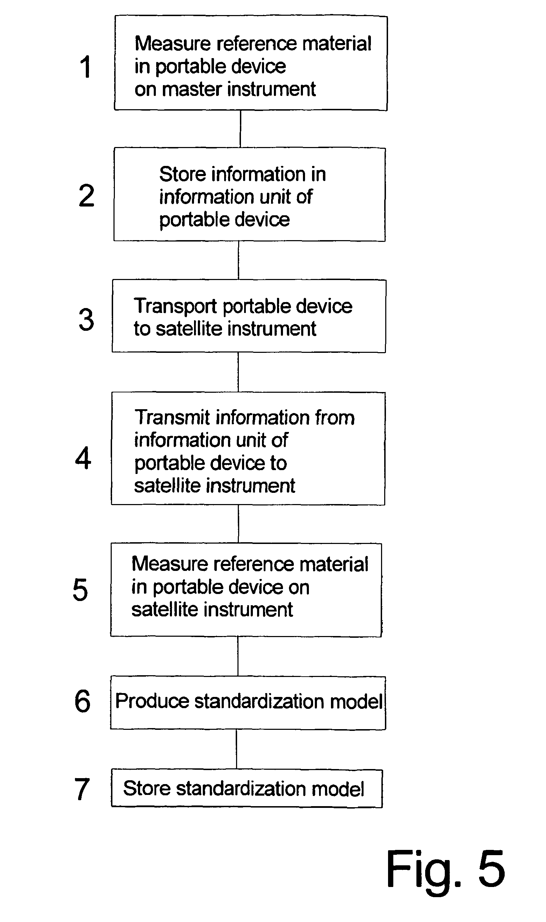

Now, referring to the flow chart of Fig. 5, a method for standardization of a satellite measuring instrument to a corresponding master measuring instrument will be described.

In step 1 of Fig. 5, a reference material, being contained in a portable device according to the invention, is measured on a master measuring instrument.

In step 2, information identifying the master measuring instrument, the reference material and the type of portable device is transmitted wirelessly from the master instrument, or from an external computer connected to the master instrument, to the information unit of the portable device and stored in the memory comprised in the information unit. Further, the transmitted information includes the result, in the form of reference spectral data, of the measurement of the reference material on the master instrument. In this step, fast and easy storing of the information together with the reference material is provided.

In step 3, the portable device is transported from the master instrument to a user of a satellite instrument and put onto the satellite measuring instrument which is to be standardized. In this step, increased security of the transport and management of the information, which is to be used together with the reference material for standardization of the satellite measuring instrument, is provided. Since this standardization information is physically bound together with the reference material in the portable device, the risk of choosing the wrong standardization information, or losing the information, is as good as eliminated.

In step 4, the information stored in the information unit of the portable device is transmitted wirelessly to the satellite instrument. This step may be performed automatically when the portable device is placed on the satellite instrument. By transmitting the information wirelessly and automatically to the satellite instrument, the procedure gets quick and simple.

In step 5, the reference material contained in the portable device is measured by the satellite instrument. This step may also be performed automatically when the portable device is placed on the satellite instrument, and may thus be performed without delay.

In step 6, a standardization model is produced by the satellite instrument, or by an external computer connected to the satellite instrument, after comparison of the result from step 5 and the result, transmitted from the information unit of the portable device, from step 1. The standardization model describes the difference between the result obtained by measuring the reference material on the satellite instrument and the corresponding result obtained by measuring the reference material on the master instrument.

In step 7, the standardization model that is produced, is stored in a data base either in the satellite instrument or in an external computer connected to the satellite instrument. The standardization model may be one amongst several stored in the satellite instrument or the external computer connected to the instrument.

As used herein, "standardization" means to obtain, by measuring a reference material on a satellite instrument, a standardization model, which may be used with routine measurements of samples of the same type in order to obtain a standardized spectrum. This means that the standardized spectrum corresponds to the spectrum which would have been obtained on the master measuring instrument. A standardization model is unique to the sample type and the master/satellite instrument pair.

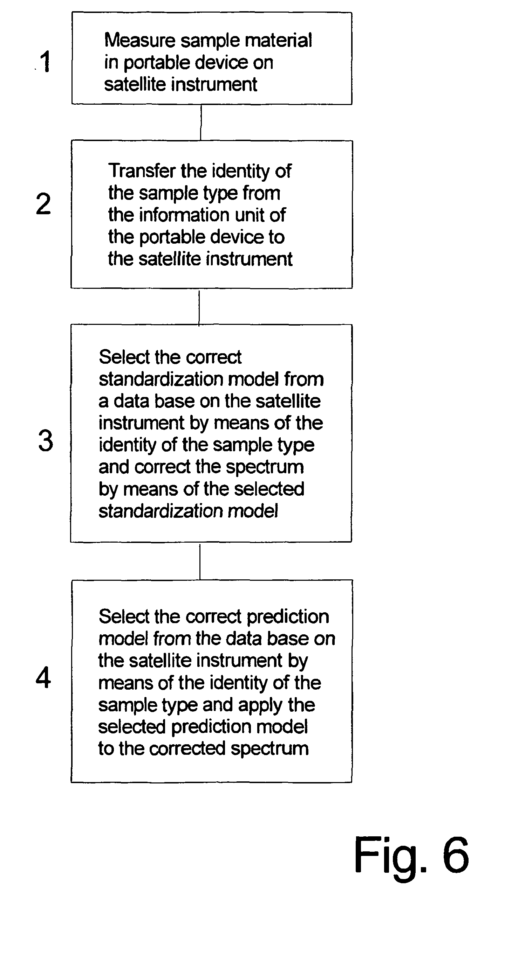

Referring to Fig. 6, a portable device may also be used for routine analysis of a sample material. This embodiment does not fall within the scope of the invention. In this case, the information stored in the memory of the information unit (14 in Fig. 1 and 2 or 42 in Fig. 4) may include information of the type of material in the portable device. The information of the sample type is transferred to the satellite instrument or the external computer connected to the instrument, and in turn used to identify the correct standardization model to be applied to the spectrum of the routine sample.

The information of the sample type may also be used to identify the correct prediction model, stored amongst several on the instrument or the external computer connected to the instrument, to be used for converting the standardised spectrum of the routine sample into an analytical result.

Referring to the flow chart in Fig. 6, this method for obtaining a standardized result, when routinely measuring a sample material by means of a satellite measuring instrument, will be described stepwise.

As will be seen from the following described steps, corresponding advantages with increased security and decreased delays, that were mentioned in connection with the method for standardization according to Fig. 5, counts for the routine analysis according to Fig. 6.

In step 1 of Fig. 6, a sample material, contained in a portable device according to the invention, is measured on a satellite instrument. The measurement may start automatically when the portable device is placed on the satellite instrument.

In step 2, the identity of the sample type is transferred wirelessly from the memory of the information unit of the portable device to the satellite instrument or the external computer connected to the satellite instrument. Additional information related to the sample itself or the sample cup may also be transferred.

In step 3, the correct standardization model is selected, from a data base on the instrument or the external computer connected to the instrument, by means of the identity of the sample type and applied to the spectrum of the routine sample from step 1. Thereby, the spectrum is corrected so that it is essentially identical to the spectrum that would have been obtained by means of the master instrument.

In step 4, the identity of the sample type is used to select the correct prediction model, from the data base on the instrument or the external computer connected to the instrument. The selected prediction model is applied to the corrected spectrum in order to obtain the desired analytical result for the sample material that is essentially identical to the result that would have been obtained by means of the master instrument.

A portable device according to the invention is be used for standardization by means of a reference material contained in the portable device. In an embodiment which does not fall within the scope of the invention, it is used for routine analysis of a sample material contained in the portable device.

Regardless of whether the portable device is used for standardization or for routine analysis, the information stored in the information unit of the portable device may also include identification of the type of the portable device, for example cup size, reflection/transmission characteristics etc.

Regardless of whether the portable device is used for standardization or for routine analysis, the information unit of the portable device may also comprise a temperature sensor for sensing the temperature in the vicinity of the reference or sample material during measurement. The information unit may then be arranged to transmit this information to the measuring instrument, or to an external computer connected to the measuring instrument.

Even though this description of the present invention only has concerned its applicability to spectal analysis of material characteristics, the invention may also be applicable to other types of measurements of mechanical, chemical and optical characteristics in addition to the spectral analysis of material characteristics. The inventive portable device may then be modified and adapted for the specific type of measurement. Also the specific information stored in the information unit of the inventive portable device may be adapted for other types of measurements. Examples of such other types of measurements are chromatography, isotope analysis, image analysis and other types of electromagnetic waves analyses.

It is to be understood that modifications of the above-described portable devices, measuring instruments and methods can be made by people skilled in the art without departing from the scope of the invention defined by the appended claims.

## Claims

1. A portable device (10;40) for standardization of a satellite spectral measuring instrument (20) to a corresponding master spectral measuring instrument, the device (10;40) comprising a reference material (11), a means (12, 41) for containing reference material (11), and an information unit (14;42) physically attached to said means (12, 41) for containing the reference material (11) and having a memory (15) for storing information about the reference material (11) **characterized in that** the memory (15) also stores one or both transmission and reflection reference spectral data of spectral measurements of the reference material (11) on the master spectral measuring instrument; and said means (12, 41) for containing a reference material (11) comprises one or more windows (17) disposed to permit one or both transmission and reflection measurements by the satellite spectral measuring instrument (20) on said reference material (11).

2. A portable device (10;40) according to claim 1, wherein said information further is about said master spectral measuring instrument.

3. A portable device (10;40) according to any one of the preceding claims, wherein said information unit (14;42) further comprises means (16;42) for transmitting said information to said satellite spectral measuring instrument (20).

4. A portable device (10;40) according to claim 3, wherein said means (16;42) for transmitting said information is arranged for wireless data transfer.

5. A portable device (40) according to claim 3, wherein said means (16;42) for transmitting said information comprises a radio frequency identifier (42).

6. A portable device (10;40) according to any one of the preceding claims, wherein said information about the reference material (11) comprises identification of said reference material (11).

7. A portable device (10;40) according to any one of the preceding claims, wherein said information about the reference material (11) further comprises an expiry date of said reference material.

8. A portable device (10;40) according to any one of the preceding claims, wherein said information about measurements of the reference material on the master spectral measuring instrument comprises a reference spectrum.

9. A portable device (10;40) according to claim 8, wherein said reference spectrum is within the visible and infrared wavelength interval.

10. A method for standardization of a satellite spectral measuring instrument (20) to a corresponding master spectral measuring instrument, comprising
storing information obtained by means of a master spectral measuring instrument regarding a reference material (11) contained in a portable device (10, 40) according to any of the preceding claims in the information unit (14) of said portable device (10, 40);
transporting said portable device (10, 40) from said master spectral measuring instrument to said satellite spectral measuring instrument (20);
transmitting said information from said information unit (14) to said satellite spectral measuring instrument (20);
measuring, by means of said satellite spectral measuring instrument (20), said reference material (11); and
producing and storing a standardization model describing the difference between the result of said action of measuring said reference material (11) and said corresponding measurement obtained by means of said master spectral measuring instrument.

11. A method according to claim 10, wherein said producing and storing of said standardization model is made in said satellite spectral measuring instrument (20).

12. A method according to claim 10 or 11, wherein said transmitting of said information is made wirelessly.

13. A method according to claim 10, 11 or 12, wherein said information further is about said reference material (11) and said master spectral measuring instrument.

14. A method according to any one of claims 10 to 13, said method being performed by the help of an external computer.

15. A method according to claim 14, wherein said action of producing and storing said standardization model is performed by means of said external computer.

16. A method according to any one of claims 10 to 15, wherein said method is performed automatically when said portable device (10, 40) is located in a receiving means (21) of said satellite spectral measuring instrument (20).

17. A portable device (40) according to any of the claims 1 to 9 **characterized in that** the means for containing the reference material consists of a cup (41) and **in that** the information unit (14) comprises a chip (42) for storing information about said reference material (11) and for wirelessly transmitting said information to a spectral measurement instrument (20) for measuring said reference material (11).

## Patentansprüche

1. Eine tragbare Vorrichtung (10; 40) zur Standardisierung eines Satelliten-Spektralmessinstruments (20) nach einem entsprechenden Hauptspektralmessinstrument, wobei die Vorrichtung (10; 40) ein Referenzmaterial (11), ein Mittel (12, 41) zum Halten des Referenzmaterials (11) und eine Informationseinheit (14; 42), die physisch an dem Mittel (12, 41) zum Halten des Referenzmaterials (11) angebracht ist und einen Speicher (15) zum Speichern von Informationen über das Referenzmaterial (11) aufweist, beinhaltet, **dadurch gekennzeichnet, dass** der Speicher (15) auch eines oder beides von Transmissions- und Reflexionsreferenzspektraldaten von spektralen Messungen des Referenzmaterials (11) auf dem Hauptspektralmessinstrument speichert; und das Mittel (12, 41) zum Halten eines Referenzmaterials (11) ein oder mehrere Fenster (17) beinhaltet, die angeordnet sind, um eines oder beides von Transmissions- und Reflexionsmessungen durch das Satelliten-Spektralmessinstrument (20) an dem Referenzmaterial (11) zu gestatten.

2. Tragbare Vorrichtung (10; 40) gemäß Anspruch 1, wobei die Informationen ferner das Hauptspektralmessinstrument betreffen.

3. Tragbare Vorrichtung (10; 40) gemäß einem der vorhergehenden Ansprüche, wobei die Informationseinheit (14; 42) ferner ein Mittel (16, 42) zum Übertragen der Informationen an das Satelliten-Spektralmessinstrument (20) beinhaltet.

4. Tragbare Vorrichtung (10; 40) gemäß Anspruch 3, wobei das Mittel (16, 42) zum Übertragen der Informationen zur drahtlosen Datenübermittlung eingerichtet ist.

5. Tragbare Vorrichtung (40) gemäß Anspruch 3, wobei das Mittel (16, 42) zum Übertragen der Informationen einen Radiofrequenzidentifikator (42) beinhaltet.

6. Tragbare Vorrichtung (10; 40) gemäß einem der vorhergehenden Ansprüche, wobei die Informationen über das Referenzmaterial (11) eine Identifizierung des Referenzmaterials (11) beinhalten.

7. Tragbare Vorrichtung (10; 40) gemäß einem der vorhergehenden Ansprüche, wobei die Informationen über das Referenzmaterial (11) ferner ein Verfalldatum des Referenzmaterials beinhalten.

8. Tragbare Vorrichtung (10; 40) gemäß einem der vorhergehenden Ansprüche, wobei die Informationen über Messungen des Referenzmaterials auf dem Hauptspektralmessinstrument ein Referenzspektrum beinhalten.

9. Tragbare Vorrichtung (10; 40) gemäß Anspruch 8, wobei das Referenzspektrum innerhalb des Intervalls sichtbarer und infraroter Wellenlängen liegt.

10. Ein Verfahren zur Standardisierung eines Satelliten-Spektralmessinstruments (20) nach einem entsprechenden Hauptspektralmessinstrument, das Folgendes beinhaltet:
Speichern von Informationen, die mittels eines Hauptspektralmessinstruments erhalten wurden, hinsichtlich eines Referenzmaterials (11), das in einer tragbaren Vorrichtung (10, 40) gemäß einem der vorhergehenden Ansprüche gehalten wird, in der Informationseinheit (14) der tragbaren Vorrichtung (10, 40);
Transportieren der tragbaren Vorrichtung (10, 40) von dem Hauptspektralmessinstrument zu dem Satelliten-Spektralmessinstrument (20); Übertragen der Informationen von der Informationseinheit (14) an das Satelliten-Spektralmessinstrument (20);
Messen, mittels des Satelliten-Spektralmessinstruments (20), des Referenzmaterials (11); und
Produzieren und Speichern eines Standardisierungsmodells, das den Unterschied zwischen dem Ergebnis des Vorgangs des Messens des Referenzmaterials (11) und der entsprechenden Messung, die mittels des Hauptspektralmessinstruments erhalten wurde, beschreibt.

11. Verfahren gemäß Anspruch 10, wobei das Produzieren und Speichern des Standardisierungsmodells in dem Satelliten-Spektralmessinstrument (20) erfolgt.

12. Verfahren gemäß Anspruch 10 oder 11, wobei das Übertragen der Informationen drahtlos erfolgt.

13. Verfahren gemäß Anspruch 10, 11 oder 12, wobei die Informationen ferner das Referenzmaterial (11) und das Hauptspektralmessinstrument betreffen.

14. Verfahren gemäß einem der Ansprüche 10 bis 13, wobei das Verfahren mit Hilfe eines externen Computers durchgeführt wird.

15. Verfahren gemäß Anspruch 14, wobei der Vorgang des Produzierens und Speicherns des Standardisierungsmodells mittels des externen Computers durchgeführt wird.

16. Verfahren gemäß einem der Ansprüche 10 bis 15, wobei das Verfahren automatisch durchgeführt wird, wenn sich die tragbare Vorrichtung (10, 40) in einem Empfangsmittel (21) des Satelliten-Spektralmessinstruments (20) befindet.

17. Tragbare Vorrichtung (40) gemäß einem der Ansprüche 1 bis 9, **dadurch gekennzeichnet, dass** das Mittel zum Halten des Referenzmaterials aus einer Schale (41) besteht und dass die Informationseinheit (14) einen Chip (42) zum Speichern von Informationen über das Referenzmaterial (11) und zum drahtlosen Übertragen der Informationen an ein Spektralmessinstrument (20) zum Messen des Referenzmaterials (11) beinhaltet.

## Revendications

1. Un dispositif portable (10 ; 40) destiné à la standardisation d'un instrument de mesure spectrale par satellite (20) par rapport à un instrument de mesure spectrale principal correspondant, le dispositif (10 ; 40) comprenant un matériau de référence (11), un moyen (12, 41) destiné à contenir le matériau de référence (11) et une unité d'informations (14 ; 42) physiquement attachée audit moyen (12, 41) destiné à contenir le matériau de référence (11) et ayant une mémoire (15) destinée à stocker des informations au sujet du matériau de référence (11) **caractérisé en ce que** la mémoire (15) stocke également des données spectrales de référence soit de transmission, soit de réflexion, ou des deux, de mesures spectrales du matériau de référence (11) sur l'instrument de mesure spectrale principal ; et ledit moyen (12, 41) destiné à contenir un matériau de référence (11) comprend une ou plusieurs fenêtres (17) disposées afin de permettre des mesures soit de transmission, soit de réflexion, ou des deux, par l'instrument de mesure spectrale par satellite (20) sur ledit matériau de référence (11).

2. Un dispositif portable (10 ; 40) selon la revendication 1, dans lequel lesdites informations sont en outre au sujet dudit instrument de mesure spectrale principal.

3. Un dispositif portable (10 ; 40) selon n'importe laquelle des revendications précédentes, dans lequel ladite unité d'informations (14 ; 42) comprend en outre un moyen (16 ; 42) destiné à transmettre lesdites informations audit instrument de mesure spectrale par satellite (20).

4. Un dispositif portable (10 ; 40) selon la revendication 3, dans lequel ledit moyen (16 ; 42) destiné à transmettre lesdites informations est agencé pour un transfert de données sans fil.

5. Un dispositif portable (40) selon la revendication 3, dans lequel ledit moyen (16 ; 42) destiné à transmettre lesdites informations comprend un identificateur de radiofréquence (42).

6. Un dispositif portable (10 ; 40) selon n'importe laquelle des revendications précédentes, dans lequel lesdites informations au sujet du matériau de référence (11) comprennent une identification dudit matériau de référence (11).

7. Un dispositif portable (10 ; 40) selon n'importe laquelle des revendications précédentes, dans lequel lesdites informations au sujet du matériau de référence (11) comprennent en outre une date d'expiration dudit matériau de référence.

8. Un dispositif portable (10 ; 40) selon n'importe laquelle des revendications précédentes, dans lequel lesdites informations au sujet des mesures du matériau de référence sur l'instrument de mesure spectrale principal comprennent un spectre de référence.

9. Un dispositif portable (10 ; 40) selon la revendication 8, dans lequel ledit spectre de référence se trouve dans les limites de l'intervalle de longueur d'onde visible et infrarouge.

10. Une méthode destinée à la standardisation d'un instrument de mesure spectrale par satellite (20) par rapport à un instrument de mesure spectrale principal correspondant, comprenant
le fait de stocker des informations obtenues au moyen d'un instrument de mesure spectrale principal concernant un matériau de référence (11) contenu dans un dispositif portable (10, 40) selon n'importe lesquelles des revendications précédentes dans l'unité d'informations (14) dudit dispositif portable (10, 40) ;
le fait de transporter ledit dispositif portable (10, 40) dudit instrument de mesure spectrale principal audit instrument de mesure spectrale par satellite (20) ;
le fait de transmettre lesdites informations de ladite unité d'informations (14) audit instrument de mesure spectrale par satellite (20) ;
le fait de mesurer, au moyen dudit instrument de mesure spectrale par satellite (20), ledit matériau de référence (11) ; et
le fait de produire et stocker un modèle de standardisation décrivant la différence entre le résultat de ladite action consistant à mesurer ledit matériau de référence (11) et ladite mesure correspondante obtenue au moyen dudit instrument de mesure spectrale principal.

11. Une méthode selon la revendication 10, dans laquelle ladite production et ledit stockage dudit modèle de standardisation sont réalisés dans ledit instrument de mesure spectrale par satellite (20).

12. Une méthode selon la revendication 10 ou la revendication 11, dans laquelle ladite transmission desdites informations est réalisée de manière sans fil.

13. Une méthode selon la revendication 10, la revendication 11 ou la revendication 12, dans laquelle lesdites informations sont en outre au sujet dudit matériau de référence (11) et dudit instrument de mesure spectrale principal.

14. Une méthode selon n'importe laquelle des revendications 10 à 13, ladite méthode étant effectuée à l'aide d'un ordinateur externe.

15. Une méthode selon la revendication 14, dans laquelle ladite action consistant à produire et stocker ledit modèle de standardisation est effectuée au moyen dudit ordinateur externe.

16. Une méthode selon n'importe laquelle des revendications 10 à 15, ladite méthode étant effectuée automatiquement lorsque ledit dispositif portable (10, 40) est situé dans un moyen de réception (21) dudit instrument de mesure spectrale par satellite (20).

17. Un dispositif portable (40) selon n'importe lesquelles des revendications 1 à 9 **caractérisé en ce que** le moyen destiné à contenir le matériau de référence consiste en une coupelle (41) et **en ce que** l'unité d'informations (14) comprend une puce (42) destinée à stocker des informations au sujet dudit matériau de référence (11) et destinée à transmettre de manière sans fil lesdites informations à un instrument de mesure spectrale (20) destiné à mesurer ledit matériau de référence (11).
